# EUROPEAN PATENT APPLICATION

(11) **EP 4 715 921 A1**
(43) Date of publication of application: **25.03.2026**
(21) Application number: 25201416.2
(22) Date of filing: 10.09.2025
(51) Int. Cl.: H01M 10/04, H01M 10/0585, H01M 50/105, H01M 50/166

(54) **DEVICE FOR PRESSING AND SEALING ALL-SOLID-STATE SECONDARY BATTERY**

(30) Priority: 11.09.2024 KR 20240123807
(71) Applicant: Hana Technology Co., Ltd., Gyeonggi-do 17118 (KR)
(72) Inventor: HAN, Seung A, 16682 Suwon-si, Gyeonggi-do (KR); HAN, Seung Kyu, 15500 Ansan-si, Gyeonggi-do (KR); LEE, Souk Woo, 18297 Hwaseong-si, Gyeonggi-do (KR); KIM, Sang Rae, 17103 Yongin-si, Gyeonggi-do (KR)
(74) Representative: Zimmermann, Tankred Klaus

(57) **Abstract**

A device for pressing and sealing an all-solid-state secondary battery protects one or more all-solid-state secondary batteries placed in an internal space created by a first cover and a second cover being vacuum-sealed to each other from heat-transfer fluid, while preventing bending or warping that may occur in the secondary batteries during a WIP process.

## Description

### CROSS REFERENCE TO RELATED APPLICATION

The present application claims priority to Korean Patent Application No. 10-2024-0123807, filed September 11, 2024, the entire contents of which are incorporated herein by reference for all purposes.

### FIELD OF DISCLOSURE

The present disclosure relates to a device for pressing and sealing an all-solid-state secondary battery. More particularly, the device includes a first cover and a second cover that are configured to be vacuum-sealed to each other to define an internal space therebetween. The device protects one or more all-solid-state secondary batteries placed in the internal space from heat-transfer fluid, while preventing bending or warping that may occur in the one or more secondary batteries during a Warm Isostatic Pressing (WIP) process.

### BACKGROUND

Recently, as the development of electric vehicles, energy storage batteries, robots, and satellites has begun in earnest, research on secondary batteries, which are high-performance batteries that can be charged and discharged repeatedly, is actively underway. Commercialized secondary batteries at present include nickel-cadmium batteries, nickel-hydrogen batteries, nickel-zinc batteries, and lithium-ion secondary batteries. Among these, lithium-ion secondary batteries are in the spotlight due to their advantages of having a very low self-discharge rate and higher energy density and having flexible charge and discharge capabilities as there is almost no memory effect compared to nickel-based secondary batteries.

The lithium secondary batteries primarily use lithium oxide and carbon materials as the positive and negative electrode active materials, respectively. Furthermore, a lithium secondary battery's electrode assembly is composed of positive and negative electrode plates coated with positive and negative electrode active materials, respectively, the positive and negative electrode plates being separated by a separator disposed therebetween.

In particular, an all-solid-state secondary battery is a type of secondary battery in which all of the main components are solid materials. By using a solid electrolyte, the risk of fire and explosion is significantly reduced, expanding the range of applications. Furthermore, lithium metal, which has been unusable due to fire and explosion risks despite the superior performance thereof, can be used as a negative electrode material, dramatically increasing the energy density. Development of all-solid-state secondary batteries that offer these advantages is currently underway.

Meanwhile, in the solid electrolyte of all-solid-state secondary batteries, where ions move within the solid lattices of the active material, maximizing the contact area between the active material and the solid electrolyte while minimizing interfacial resistance is crucial. High pressure and high temperature processes are known for this purpose, which are used to pressurize or density battery components under isotropic pressure conditions by employing a fluid, which is a pressure transmission medium, after stacking a solid electrolyte layer. As an example, warm isostatic pressing (WIP) may be performed. When performing WIP, a process of enclosing an all-solid-state secondary battery needs to be performed first to protect the secondary battery from a fluid, such as water or oil, which is a pressure transmission medium.

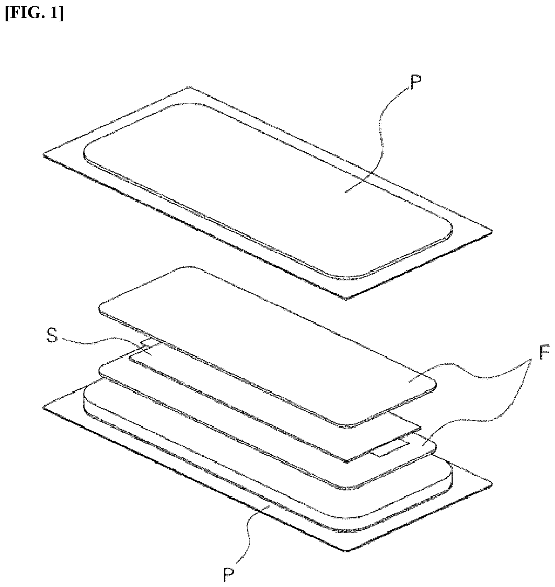

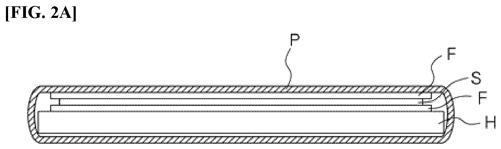

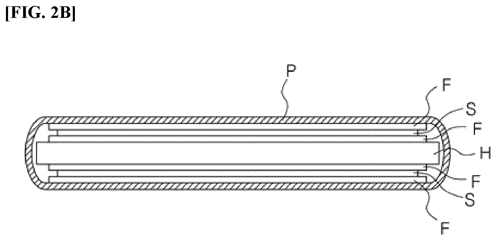

FIG. 1 is a reference view showing a method for securing airtightness in an all-solid-state secondary battery before performing a conventional WIP process. FIG. 2A is a cross-sectional view showing the stacked structure within a pouch film during a conventional pre-pouching process for a single cell. FIG. 2B is a cross-sectional view showing the stacked structure within a pouch film during a conventional pre-pouching process for a bi-cell. Below, the problems of the conventional technology will be explained with reference to FIGS. 1 to 2B.

Referring to FIG. 1, typically, the pre-pouching process is performed to ensure airtightness for an all-solid-state secondary battery S before performing the WIP process. Pre-pouching is a step in the sealing process of the all-solid-state secondary battery S, where the secondary battery S is enclosed and sealed within an aluminum pouch film P. When the WIP process is completed, an unpouching process is performed, in which the pouch film P is torn and removed. At this time, the pouch film P is a disposable consumable and cannot be reused.

During the WIP process, the thin film-shaped pouch film P may be bent by the pressure applied to the pouch film P by means of the heat-transfer fluid, and accordingly, the all-solid-state secondary battery S enclosed within the pouch film P may also be bent and damaged. To prevent bending of the all-solid-state secondary battery S that may occur during the WIP process and to maintain the shape thereof, a hard plate H needs to be placed on one side of the all-solid-state secondary battery S. The hard plate H may be, for example, a steel use stainless (SUS) plate.

In addition, during the unpouching process, it is common for one side of the all-solid-state secondary battery S to stick to the pouch film P and/or hard plate H, causing damage to the all-solid-state secondary battery S. To prevent this, a release film F is placed between the pouch film P and the all-solid-state secondary battery S, and between the all-solid-state secondary battery S and the hard plate H.

Referring to FIG. 2A, in the pre-pouching process for a single cell, for example, a release film F and a hard plate H may be stacked on one side of an all-solid-state secondary battery S, and a release film F may be stacked on the other side of the all-solid-state secondary battery S opposite to the one side. When placing the release films F in this way, in order to separate the release films F from the secondary battery S for which the WIP process has been completed, an additional process of removing the release films F needs to be performed using a separate gripper (not shown).

Referring to FIG. 2B, in the unpouching process for a multi-cell such as a bi-cell, a release film F, an all-solid-state secondary battery S, and a release film F may be sequentially stacked on one side of a hard plate H, and a release film F, an all-solid-state secondary battery S, and a release film F may be sequentially stacked on the other side of the hard plate H opposite to the one side. As such, a hard plate H is placed between a pair of all-solid-state secondary batteries S. Thus, if the WIP process is performed after the pre-pouching process for a plurality of all-solid-state secondary batteries S, it becomes difficult to apply a uniform pressure to the entire surface of an individual all-solid-state secondary battery S by means of a fluid, which is a pressure transmission medium because a hard plate H needs to be placed in each space between all-solid-state secondary batteries S.

In order to prevent the above-mentioned problems, the inventors of the present disclosure propose a novel device 1 for pressing and sealing an all-solid-state secondary battery, the details of which will be described later.

### Documents of Related Art

(Patent Document 0001) Korean Patent Application Publication No. 10-2015-0069523 "ALL-SOLID-STATE SECONDARY BATTERY AND METHOD FOR MANUFACTURING SAME"

### SUMMARY OF DISCLOSURE

The present disclosure has been made to solve the problems of the related art, and an objective of the present disclosure is to provide a device for pressing and sealing an all-solid-state secondary battery, the device enabling reuse in a WIP process for an all-solid-state secondary battery by allowing a first cover and a second cover to be vacuum-sealed to each other and release the vacuum seal without a damaged area.

In addition, an objective of the present disclosure is to provide a device for pressing and sealing an all-solid-state secondary battery, the device enabling easy automatic packing and unpacking of first and second covers by allowing the first and second covers to be vacuum-sealed to each other without a separate coupling means, and allowing the first and second covers to be released from the vacuum sealing due to the gripping of a first grip part of the first cover and a second grip part of the second cover using a separate unit.

In addition, an objective of the present disclosure is to provide a device for pressing and sealing an all-solid-state secondary battery, in which first and second covers are vacuum-sealed to each other by means of a first suction surface part and a second suction surface part which are suction pad configurations, enabling easy suction and release of suction. In addition, an objective of the present disclosure is to provide a device for pressing and sealing an all-solid-state secondary battery, in which the bottom surface of a first pressing surface part and/or the top surface of a second pressing surface part have a relatively large surface roughness, or a release film is attached to the bottom surface of the first pressing surface part and/or the top surface of the second pressing surface part, so that an all-solid-state secondary battery can be easily separated from the first cover and/or the second cover after the completion of a WIP process without sticking to the first cover and/or the second cover.

In addition, an objective of the present disclosure is to provide a device for pressing and sealing an all-solid-state secondary battery, the device preventing damage to an all-solid-state secondary battery due to resistance to bending of a first cover and/or a second cover during a WIP process, by inserting an insert into the inner side of a first bending prevention part and/or a second bending prevention part.

In addition, an objective of the present disclosure is to provide a device for pressing and sealing an all-solid-state secondary battery, the device allowing substantially uniform pressure to be applied to the front surface of a plurality of all-solid-state secondary batteries, especially when performing a WIP process after inserting the all-solid-state secondary batteries into a single internal space, by not inserting a hard plate into the internal space created by mutual suction of a first cover and a second cover.

In addition, an objective of the present disclosure is to provide a device for pressing and sealing an all-solid-state secondary battery, the device enabling easy automated grip transfer of a first cover and/or a second cover by forming a first protrusion part and/or a second protrusion part.

In addition, an objective of the present disclosure is to provide a device for pressing and sealing an all-solid-state secondary battery, the device providing a space for a gripper to easily grip a first protrusion part and/or a second protrusion part by forming a first wing part and/or a second wing part.

In addition, an objective of the present disclosure is to provide a device for pressing and sealing an all-solid-state secondary battery, the device enabling easy removal of heat-transfer fluid remaining on the edge side of a first wing part and/or a second wing part by forming the side surface of the first wing part and/or the second wing part to extend in an inclined manner.

In addition, an objective of the present disclosure is to provide a device for pressing and sealing an all-solid-state secondary battery, the device further improving the adhesion between a first grip part and a portion of a first cover underneath the first grip part and/or the adhesion between a second grip part and a portion of a second cover over the second grip part by forming the first grip part and/or the second grip part such that the top-bottom thickness thereof becomes lesser as extending outward.

In addition, an objective of the present disclosure is to provide a device for pressing and sealing an all-solid-state secondary battery, the device enabling easy separation of a first cover and a second cover by ensuring that a first grip part is positioned on a side that does not overlap with a second grip part.

In addition, an objective of the present disclosure is to provide a device for pressing and sealing an all-solid-state secondary battery, in which the edge sides of a first suction surface part and a second suction surface part are formed in a rounded shape, so that the edge sides are prevented from lifting during mutual vacuum suction of a first cover and a second cover.

The present disclosure may be implemented by an embodiment having the following configuration to achieve the above-described objectives.

According to an embodiment of the present disclosure, there is provided a device for pressing and sealing an all-solid-state secondary battery, the device including: a first cover; and a second cover, the first cover and the second cover being configured to be mutually suctioned and/or vacuum-sealed to each other to define an internal space therebetween to place at least one all-solid-state secondary battery therein, wherein the first cover may include a first pressing surface part configured to press at least a first surface of the at least one all-solid-state secondary battery placed in the internal space by pressure transmitted by a heat-transfer fluid, and wherein the second cover may include a second pressing surface part configured to press at least a second surface of the at least one all-solid-state secondary battery placed in the internal space by the pressure transmitted by the heat-transfer fluid.

According to another embodiment of the present disclosure, in the device for pressing and sealing an all-solid-state secondary battery, the first pressing surface part may include a top surface that is recessed downward from a top surface of the first cover to form a groove.

According to still another embodiment of the present disclosure, in the device for pressing and sealing an all-solid-state secondary battery, the first pressing surface part may include a silicone or rubber material.

According to still another embodiment of the present disclosure, in the device for pressing and sealing an all-solid-state secondary battery, at least one side of a first surface of the first pressing surface part that is configured to come into contact with the all-solid-state secondary battery when pressed by the heat-transfer fluid may have a greater surface roughness than a surface roughness of a second surface of the first pressing surface part that does not come into contact with the all-solid-state secondary battery when pressed, the first surface of the first pressing surface part and the second surface of the first pressing surface part being positioned opposite to each other.

According to still another embodiment of the present disclosure, the device for pressing and sealing an all-solid-state secondary battery may further include a release film configured to be disposed between the first pressing surface part and the at least one all-solid-state secondary battery when the first cover and the second cover are vacuum-sealed to each other.

According to still another embodiment of the present disclosure, in the device for pressing and sealing an all-solid-state secondary battery, the first cover may further include a first suction surface part positioned on an end or edge side of the first cover, and the second cover may further include a second suction surface part positioned on an end or edge side of the second cover, wherein the first suction surface part and the second suction surface part may be configured to be vacuum-sealed and/or suctioned to each other.

According to still another embodiment of the present disclosure, in the device for pressing and sealing an all-solid-state secondary battery, the first suction surface part may have a rounded edge shape.

According to still another embodiment of the present disclosure, in the device for pressing and sealing an all-solid-state secondary battery, the first cover may further include a first bending prevention frame positioned on an outside of the first pressing surface part and having a first insert inserted into an inner side of the first bending prevention frame.

According to still another embodiment of the present disclosure, in the device for pressing and sealing an all-solid-state secondary battery, the first bending prevention frame may have a greater top-bottom thickness than a top-bottom thickness of the first pressing surface part.

According to still another embodiment of the present disclosure, in the device for pressing and sealing an all-solid-state secondary battery, the first cover may further include at least one first protrusion part protruding outward from a side of the first cover.

According to still another embodiment of the present disclosure, in the device for pressing and sealing an all-solid-state secondary battery, the first cover may further include at least one first protrusion part protruding outward from a side of the first cover, and the first insert may be integral with the at least one first protrusion part.

According to still another embodiment of the present disclosure, in the device for pressing and sealing an all-solid-state secondary battery, the first cover may further include a first reinforcement member attached to a surface of the first cover on an outside of the first pressing surface part.

According to still another embodiment of the present disclosure, in the device for pressing and sealing an all-solid-state secondary battery, the first reinforcement member may be attached to a top surface of the first cover and has a shape surrounding the first pressing surface part.

According to still another embodiment of the present disclosure, in the device for pressing and sealing an all-solid-state secondary battery, the first cover may further include at least one first wing part, each being recessed downward from a top surface of the first cover underneath each of the at least one first protrusion part.

According to still another embodiment of the present disclosure, in the device for pressing and sealing an all-solid-state secondary battery, a bottom surface of each of the at least one first wing part may be spaced apart from each of the at least one first protrusion part.

According to still another embodiment of the present disclosure, in the device for pressing and sealing an all-solid-state secondary battery, each of the at least one first wing part may include: a bottom surface; and a side surface extending upward from the bottom surface, wherein the side surface may extend upward at angle from the bottom surface of each of the at least one first wing part.

According to still another embodiment of the present disclosure, in the device for pressing and sealing an all-solid-state secondary battery, the side surface of each of the at least one first wing part may extend at an obtuse angle with respect to the bottom surface of each of the at least one first wing part.

According to still another embodiment of the present disclosure, in the device for pressing and sealing an all-solid-state secondary battery, the first cover may further include at least one first grip part protruding outward from a side of the first cover.

According to still another embodiment of the present disclosure, in the device for pressing and sealing an all-solid-state secondary battery, each of the at least one first grip part may have a tapered shape.

According to still another embodiment of the present disclosure, in the device for pressing and sealing an all-solid-state secondary battery, the second cover may further include at least one second grip part protruding outward from a side of the second cover, wherein when viewed from a top of the device, each of the at least one first grip part may have at least one side portion that is configured to not overlap with corresponding each of the at least one second grip part when the first cover and the second cover are suctioned and/or vacuum-sealed to each other.

The present disclosure has the following effects by the above configurations.

According to the present disclosure, by allowing a first cover and a second cover to be vacuum-sealed to each other and be released from the vacuum sealing without a damaged area, reuse is possible in a WIP process for an all-solid-state secondary battery.

In addition, according to the present disclosure, easy automatic packing and unpacking of first and second covers is possible by allowing the first and second covers to be vacuum-sealed to each other without a separate coupling means, and allowing the first and second covers to be released from the vacuum sealing due to the gripping of a first grip part of the first cover and a second grip part of the second cover using a separate unit.

In addition, according to the present disclosure, since first and second covers are vacuum-sealed to each other by means of a first suction surface part and a second suction surface part which are suction pad configurations, easy suction and release of suction is possible.

In addition, according to the present disclosure, since the bottom surface of a first pressing surface part and/or the top surface of a second pressing surface part have a relatively large surface roughness, or a release film is attached to the bottom surface of the first pressing surface part and/or the top surface of the second pressing surface part, an all-solid-state secondary battery can be easily separated from the first cover and/or the second cover after the completion of a WIP process without sticking to the first cover and/or the second cover.

In addition, according to the present disclosure, by inserting an insert into the inner side of a first bending prevention part and/or a second bending prevention part, it is possible to prevent damage to an all-solid-state secondary battery due to resistance to bending of a first cover and/or a second cover during a WIP process.

In addition, according to the present disclosure, even without inserting a hard plate into the internal space created by mutual suction of a first cover and a second cover, it is possible to apply substantially uniform pressure to the front surface of a plurality of all-solid-state secondary batteries, especially when performing a WIP process after inserting the all-solid-state secondary batteries into the single internal space.

In addition, according to the present disclosure, by forming a first protrusion part and/or a second protrusion part, easy automated grip transfer of a first cover and/or a second cover is possible.

In addition, according to the present disclosure, part by forming a first wing part and/or a second wing part, a space for a gripper to easily grip a first protrusion part and/or a second protrusion part can be provided.

In addition, according to the present disclosure, by forming the side surface of a first wing part and/or a second wing part to extend in an inclined manner, easy removal of heat-transfer fluid remaining on the edge side of the first wing part and/or the second wing part is possible.

In addition, according to the present disclosure, by forming a first grip part and/or a second grip part such that the top-bottom thickness thereof becomes lesser as extending outward, the adhesion between a first grip part and a portion of a first cover and/or the adhesion between a second grip part and a portion of a second cover can be further improved.

In addition, according to the present disclosure, by ensuring that a first grip part is positioned on a side that does not overlap with a second grip part, easy separation of a first cover and a second cover is possible.

In addition, according to the present disclosure, since the edge sides of a first suction surface part and a second suction surface part are formed in a rounded shape, the edge sides can be prevented from lifting during mutual vacuum suction of a first cover and a second cover.

Meanwhile, it should be added that even if effects are not explicitly mentioned herein, the effects described in the following specification expected by the technical features of the present disclosure and their potential effects are treated as if they were described in the specification of the present disclosure.

### BRIEF DESCRIPTION OF THE DRAWINGS

The above and other objectives, features, and other advantages of the present disclosure will be more clearly understood from the following detailed description when taken in conjunction with the following drawings.
FIG. 1 is a reference view showing a conventional method for securing airtightness in an all-solid-state secondary battery before a conventional WIP process.
FIG. 2A is a cross-sectional view showing the stacked structure within a pouch film during a conventional pre-pouching process for a single cell.
FIG. 2B is a cross-sectional view showing the stacked structure within a pouch film during a conventional pre-pouching process for a bi-cell.
FIG. 3 is a perspective view showing a device for pressing and sealing an all-solid-state secondary battery according to one embodiment of the present disclosure.
FIG. 4 is an exploded perspective view showing the device for pressing and sealing an all-solid-state secondary battery according to FIG. 3.
FIG. 5 is a cross-sectional view showing the device for pressing and sealing an all-solid-state secondary battery according to FIG. 3.
FIG. 6 is a plan view showing a first cover of the device according to FIG. 3.
FIG. 7 is a bottom view showing the first cover of the device according to FIG. 3.
FIG. 8 is an enlarged view showing a first wing part of the device according to FIG. 3.
FIG. 9 is a bottom view showing a second cover of the device according to FIG. 3.
FIG. 10 is a plan view showing the second cover of the device according to FIG. 3.
FIG. 11 is an enlarged view showing a second wing part of the device according to FIG. 3.

### DETAILED DESCRIPTION

Hereinafter, embodiments of the present disclosure will be described in more detail with reference to the accompanying drawings. The embodiments of the present disclosure may be modified in various forms, and the scope of the present disclosure should not be construed as being limited to the following embodiments, but should be construed based on the matters recited in the claims. In addition, these embodiments are only provided for reference in order to more completely explain the present disclosure to those of ordinary skill in the art.

As used herein, a singular form may include a plural form unless the context clearly indicates otherwise. In addition, as used herein, "comprise" and/or "comprising" specify the presence of the recited shapes, numbers, steps, operations, members, elements, and/or groups thereof, but do not exclude the presence or addition of one or more other shapes, numbers, steps, operations, members, elements, and/or groups thereof.

Hereinafter, it should be noted that when a component (or layer) is described as being disposed on another component (or layer), the component may be disposed directly on the another component, or one or more additional component(s) or layer(s) may be interposed therebetween. In addition, when one component is expressed as being directly disposed on or above another component, no other component(s) are located therebetween. Moreover, being located on "top", "upper", "lower", "above", "below" or "one (first) side" or "side" of a component means a relative positional relationship.

In addition, below, there are instances where components are described as "first", "second", etc., by indicating numbers. In this case, it should be noted that the second component does not presuppose the first component, and each component is independent of the other.

Hereinafter, the description that one component and another component are "combined" or "connected" includes not only the components being directly combined/connected, but also the components being indirectly combined/connected by a third component.

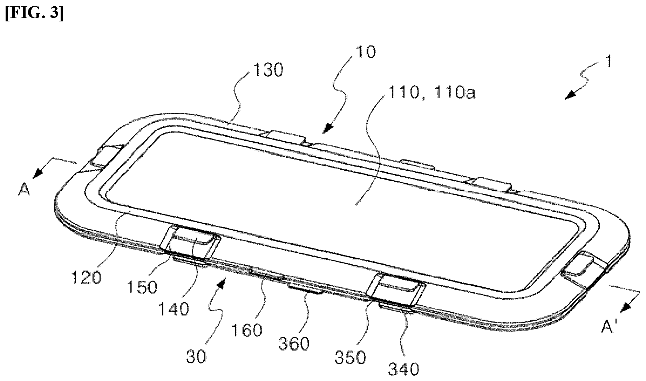

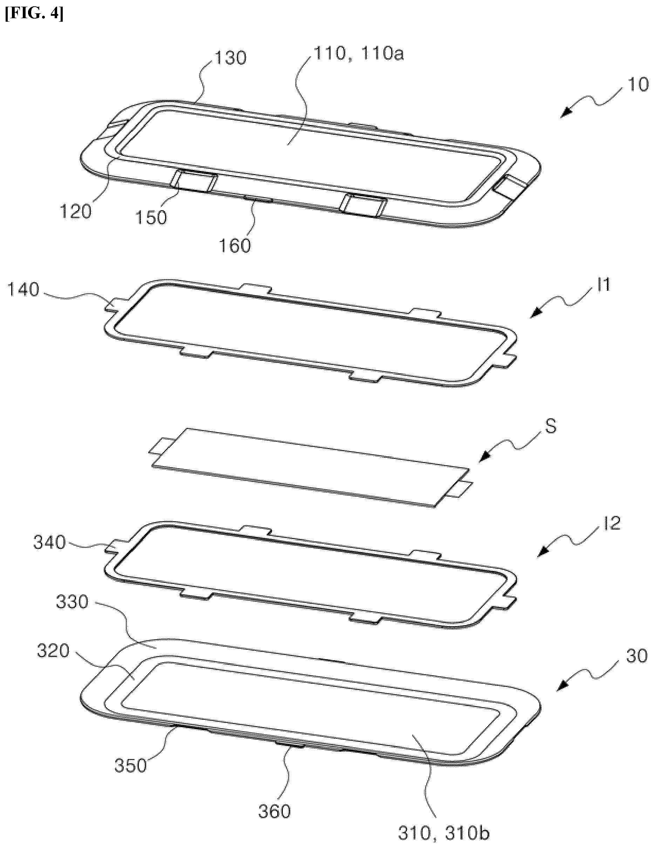

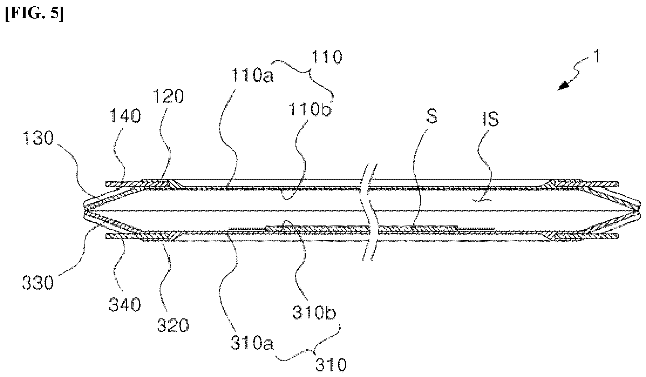

FIG. 3 is a perspective view showing a device for pressing and sealing an all-solid-state secondary battery according to one embodiment of the present disclosure. FIG. 4 is an exploded perspective view showing the device for pressing and sealing an all-solid-state secondary battery according to FIG. 3. FIG. 5 is a cross-sectional view showing the device for pressing and sealing an all-solid-state secondary battery according to FIG. 3.

Hereinafter, a device 1 for pressing and sealing an all-solid-state secondary battery according to the one embodiment of the present disclosure will be described in detail with reference to the attached drawings.

The device 1 for pressing and sealing an all-solid-state secondary battery according to the one embodiment of the present disclosure is a device configured to transmit pressure applied from heat-transfer fluid to an all-solid-state secondary battery while protecting the secondary battery from the heat-transfer fluid during a warm isostatic pressing (WIP) process. The WIP process is for maximizing the contact area between the active material and solid electrolyte and minimizing interfacial resistance in the secondary battery. The above "heat-transfer fluid" is preferably any liquid fluid such as water or oil as a pressure transmission medium, but the scope of the present disclosure is not limited thereto.

In addition, a unit cell or bi-cell may be arranged in an internal space IS of the device 1 for pressing and sealing an all-solid-state secondary battery, but the present disclosure is not limited thereto.

Referring to FIGS. 3 to 5, the present disclosure relates to the device 1 for pressing and sealing an all-solid-state secondary battery. More particularly, the device 1 includes a first cover 10 and a second cover 30 that are configured to be vacuum-sealed to each other to define an internal space IS therebetween. The device 1 protects an all-solid-state secondary battery S placed in the internal space IS from the heat-transfer fluid, while preventing bending or warping that may occur in the secondary battery S during a WIP process..

To this end, the device 1 for pressing and sealing an all-solid-state secondary battery may include the first cover 10 and the second cover 30.

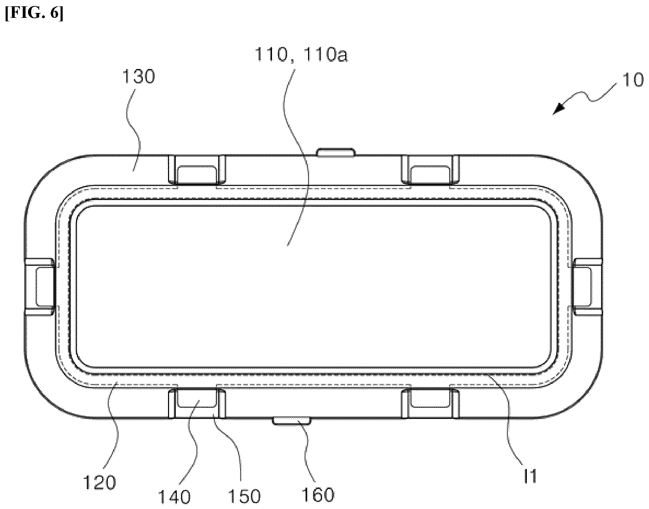

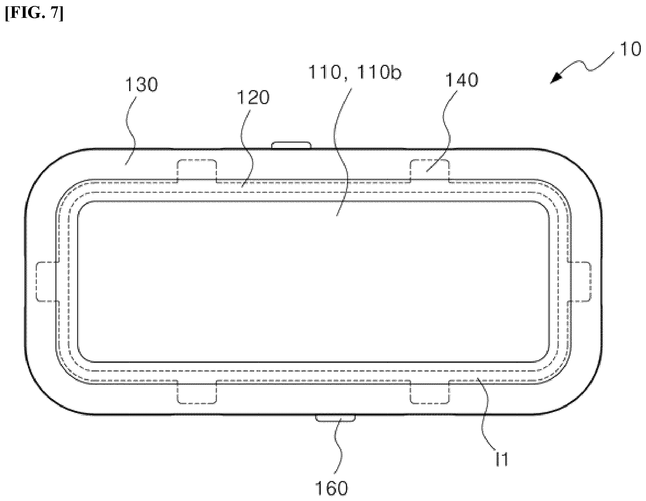

FIG. 6 is a plan view showing the first cover 10 according to FIG. 3. FIG. 7 is a bottom view showing the first cover 10 according to FIG. 3.

Referring to FIGS. 3 to 7, the first cover 10 is configured to be mutually suctioned with or vacuum-sealed to the second cover 30 to create the internal space IS in which an all-solid-state secondary battery S is placed. As an example, the first cover 10 and the second cover 30 may be vacuum-sealed to each other. In addition, the first cover 10 may be made of a material having high elongation properties on at least one side of the first cover 10 so as to press the all-solid-state secondary battery S placed in the internal space IS using pressure transmitted from heat-transfer fluid. As an example, the first cover 10 may be composed of a rubber material such as silicone, MBR synthetic rubber, FKM fluorine rubber, etc., but the scope of the present disclosure is not limited by the above examples, and the first cover 10 may be formed of any material or substance capable of pressing the all-solid-state secondary battery S by the pressure transmitted thereto.

The first cover 10 may include a first pressing surface part 110, a first bending prevention part 120, a first suction surface part 130, a first protrusion part 140, a first wing part 150, and a first grip part 160.

The first pressing surface part 110 is configured to press at least one surface of the all-solid-state secondary battery S placed in the internal space IS created by mutual suction or vacuum-sealing of the first cover 10 and the second cover 30. Thus, it is preferable that the first pressing surface part 110 be made of a material having high elongation properties. To be specific, when heat-transfer fluid is introduced into a vessel (not shown) and a pressure above a certain level is applied to the first cover 10, the first pressing surface part 110 having high elongation characteristics may transmit the applied pressure to the all-solid-state secondary battery S. The first pressing surface part 110 may be formed in a rectangular plane shape, for example, approximately at the center of the first cover 10, but the scope of the present disclosure is not limited thereto.

In addition, it is preferable that the first pressing surface part 110 has a groove-shaped top surface 110a that is recessed downward on the top surface of the first cover 10. By the top surface 110a of the first pressing surface part 110 being recessed downward in this way, a bottom surface 110b of the first pressing surface part 110 is brought into close contact with one surface of the all-solid-state secondary battery S placed in the internal space IS, so that the secondary battery S may be easily pressed. In addition, the first pressing surface part 110 is preferably thinner in top-bottom thickness than the first bending prevention part 120 so that when pressure is transmitted to the first cover 10 by the heat-transfer fluid, the pressure is easily transmitted to one surface of the all-solid-state secondary battery S.

It is preferable that the bottom surface 110b of the first pressing surface part 110 be configured to be substantially flat. In addition, in an embodiment, it is preferable that at least one side or at least one portion of the surface of the first pressing surface part 110 that comes into contact with the all-solid-state secondary battery S during pressing has a greater surface roughness than the surface that does not come into contact with the all-solid-state secondary battery S during pressing. For example, the bottom surface 110b of the first pressing surface part 110 may have a greater surface roughness (i.e. a greater roughness in a surface profile) in the form of an uneven shape than the top surface 110a of the first pressing surface part 110. Alternatively, in another embodiment, a release film may be placed between the first pressing surface part 110 and the all-solid-state secondary battery S placed in the internal space IS. For example, a release film can be attached to the bottom surface 110b of the first pressing surface part 110.

Referring to FIG. 1, as previously described, in order to protect an all-solid-state secondary battery S during a WIP process, when the secondary battery S is enclosed in an aluminum pouch film P through a pre-pouching process, one side or one surface of the secondary battery S may stick to the pouch film P during an unpouching process after the completion of the WIP process, causing damage to the secondary battery S. To prevent this, when a release film F is attached to one side or one surface of the secondary battery S, a separate process for removing the release film F from the secondary battery S needs to be performed after the WIP process is completed.

In order to prevent such problems, the present disclosure is characterized in that the bottom surface 110b of the first pressing surface part 110 is formed to have a greater surface roughness than the top surface 110a, or a release film is attached on the bottom surface 110b of the first pressing surface part 110. As a result, it is possible to prevent the all-solid-state secondary battery S from sticking to the first cover 10 after the WIP process.

Referring to FIGS. 3 to 7, the first bending prevention part 120 is configured to be provided between the first pressing surface part 110 and the first suction surface part 130 to maintain the shape of the first cover 10 and prevent bending during the WIP process. The first bending prevention part 120 is not limited in the shape thereof, but may have, for example, a planar shape with a rounded edge and a rectangular frame. In addition, the first bending prevention part 120 may be formed at a higher position than the first pressing surface part 110 that is recessed downward. In an embodiment, a first insert I1 may be inserted into the inner side of the first bending prevention part 120. The first insert I1 is preferably made of metal or plastic. As an example, the first insert I1 may be made of SK5 heat-treated steel, SUS, aluminum, engineering plastic, etc., but the scope of the present disclosure is not limited by the above examples.

Referring to FIG. 1, to protect an all-solid-state secondary battery S during a WIP process, when the secondary battery S is enclosed in an aluminum pouch film P through a pre-pouching process, the pouch film P may be bent by the pressure transmitted by the heat-transfer fluid during the WIP process, and accordingly, the secondary battery S enclosed in the pouch film P may also be bent and damaged.

In order to prevent such problems, as shown in FIGS. 3 to 7, the one embodiment of the present disclosure is characterized in that the first insert I1 is inserted into the inner side of the first bending prevention part 120. The first insert I1 may have substantially the same shape as the first bending prevention part 120, but the scope of the present disclosure is not limited thereto. By means of the first insert I1, the first pressing surface part 110 of the first cover 10 may be maintained flexible while the rigidity of the outer region of the first pressing surface part 110 may be increased.

In another embodiment, instead of the first insert I1 being inserted into the inner side of the first bending prevention part 120, a first reinforcement member I3 (i.e. a means to resist bending of the device 10) may be attached to one side of the first cover 10. The first reinforcement member I3 may be attached, for example, to the top surface of the first cover 10. At this time, the first reinforcement member I3 may be attached to a position surrounding the first pressing surface part 110. When the first reinforcement member I3 is attached to the top surface of the first cover 10 in this way, the first bending prevention part 120 may or may not be provided on the first cover 10, and there is no particular limitation thereon. In addition, the first reinforcement member I3 may be made of substantially the same material as the first insert I1.

By utilizing the pressing and sealing device 1 having the first insert I1 or the first reinforcement member I3 described above, an all-solid-state secondary battery S may be prevented from bending during a WIP process, which eliminates the need to place a separate hard plate H in the internal space IS created by the first cover 10 and the second cover 30. Thus, even if a WIP process is performed after so-called multi-stacking, which stacks a plurality of all-solid-state secondary batteries S in the internal space IS of the device 1, a uniform pressure may be transmitted to the entire surface of the plurality of all-solid-state secondary batteries S.

The first suction surface part 130 is configured to be provided on one side of the first cover 10, for example, on the end or edge side of the first cover 10, and to form a vacuum in the internal space IS through mutual suction with a second suction surface part 330. In addition, it is preferable that the first suction surface part 130 has a rounded shape on the edge side thereof to prevent the occurrence of lifting on both edge sides during vacuum suction with the second suction surface part 330 having substantially the same shape. Due to the mutual suction or vacuum-sealing of the first suction surface part 130 and the second suction surface part 330, a vacuum environment may be created in the internal space IS. The term "vacuum environment" means an environment having a pressure value lower than atmospheric pressure. In addition, the first suction surface part 130 may be formed of substantially the same material or substance as the top surface 110a of the first pressing surface part 110, but there is no particular limitation thereon. The first suction surface part 130 described may function as a suction pad. The area where the suction function is performed is the bottom surface of the first suction surface part 130 and the top surface of the second suction surface part 330. In this way, since the first cover 10 and the second cover 30 are vacuum-sealed to each other by mutual suction of the first suction surface part 130 and the second suction surface part 330 without a separate coupling means, easy automatic packing of the first cover 10 and the second cover 30 may be performed.

The first protrusion part 140 is one or more configurations that protrude outward from one side of the first cover 10. It is preferable that the first protrusion part 140 protrudes outward from one side of the first cover 10 excluding the first pressing surface part 110, and it is preferable that a plurality of first protrusion parts 140 is formed spaced apart from each other on the side of the first cover 10. Although a total of six first protrusion parts 140 are shown in FIGS. 6 and 7, the scope of the present disclosure is not limited thereto. The first protrusion part 140 may be formed integrally with the first insert I1 by protruding outward from the first insert I1 described above, or may be formed physically independently from the first insert I1. In addition, the first protrusion part 140 may be made of substantially the same material or substance as the first insert I1, or may be made of a different material or substance. The first protrusion part 140 corresponds to the side where a gripper (not shown) grips the first cover 10. Thus, easy automated grip transfer of the first cover 10 is possible by means of the first protrusion part 140.

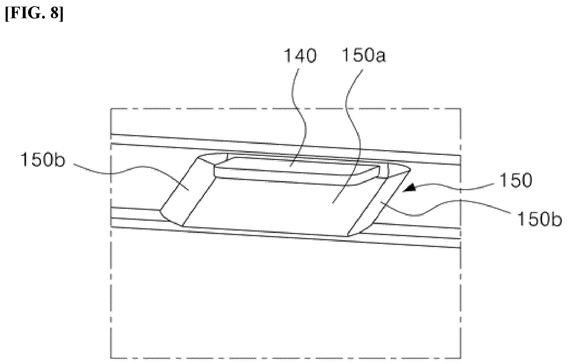

FIG. 8 is an enlarged view showing a first wing part according to FIG. 3.

Referring to FIGS. 3 to 6, and 8, the first wing part 150 is configured to be recessed downward from the top surface of the first cover 10 underneath the first protrusion part 140. By making the portion of the top surface of the first cover 10 located underneath the first protrusion part 140 recessed in this way, a free space may be provided for the gripper to easily grip the first protrusion part 140. That is, more space may be maintained between the first protrusion part 140 and the portion of the top surface of the first cover 10 corresponding to the first protrusion part 140. In addition, the first wing part 150 may have: a bottom surface 150a that is recessed downward; and two side surfaces 150b, each extending upward from the end of the bottom surface 150a. At this time, it is preferable that the side surfaces 150b extend upward obliquely rather than vertically, and extend upward at an angle so as to form an obtuse angle with the bottom surface 150a.

After performing the WIP process, a cleaning process needs to be performed to remove the heat-transfer fluid remaining on the device 1 according to the one embodiment of the present disclosure. When the side surfaces 150b of the first wing part 150 are formed to be perpendicular to the bottom surface 150a, it is not easy to clean the heat-transfer fluid remaining on the corners where the bottom surface 150a and the side surfaces 150b meet each other. On the contrary, when the side surfaces 150b of the first wing part 150 are formed to be inclined, as in the one embodiment of the present disclosure, the heat-transfer fluid at the corners where the bottom surface 150a and the side surfaces 150b meet each other may be easily removed.

Referring to FIGS. 3 to 7, the first grip part 160 is configured to protrude outward from another side of the first cover 10 to enable a user to grip the first grip part 160. The first grip part 160 may protrude outward from the side of the first cover 10 by a predetermined length.

After the WIP process, in order to take out the all-solid-state secondary battery S placed in the internal space IS the first cover 10 and the second cover 30 should be released from each other. At this time, the user may release the suction of both covers 10 and 30 by directly holding the first grip part 160 and a second grip part 360, or release the suction by using a separate unit. In this way, when the first cover 10 and the second cover 30 are automatically released from the vacuum sealing by the first grip part 160 and a second grip part 360, easy automatic unpacking of the first cover 10 and the second cover 30 may be realized.

In addition, for easy separation of the first cover 10 and the second cover 30, it is more preferable that the first grip part 160 be positioned on a side that does not overlap with the second grip part 360 or the first grip part 160 and the second grip part 360 be formed at a position spaced apart from each other in the horizontal direction. As another example, the first grip part 160 may have a side that overlaps vertically with the second grip part 360 and a side that does not overlap. That is, the first grip part 160 and the second grip part 360 may be formed in positions where they partially overlap vertically with each other. One first grip part 160 may be formed so as to protrude from the first cover 10, or two or more first grip parts 160 may be formed spaced apart from each other, and there is no particular limitation on the number of the first grip parts 160.

The first grip part 160 may be formed so that the top-bottom thickness of the first grip part 160 is continuously or discontinuously thinned along the direction in which the first grip part 160 protrudes outward from the first cover 10. That is, the first grip part 160 may be formed to be tapered. By forming the first grip part 160 in this manner, the adhesion between the first grip part 160 and the portion of the first cover 10 may be further increased.

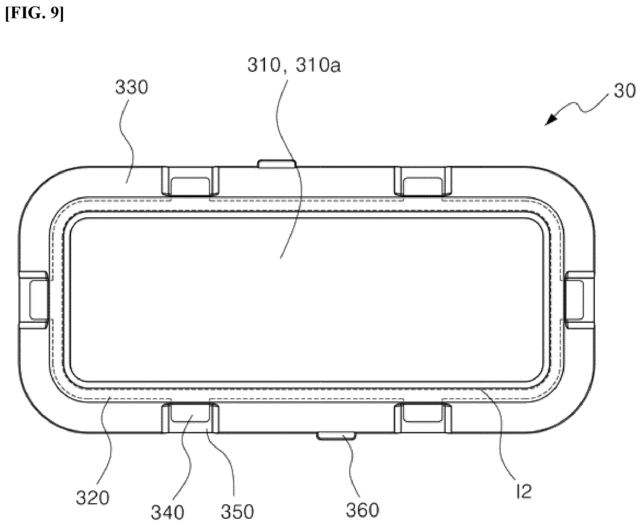

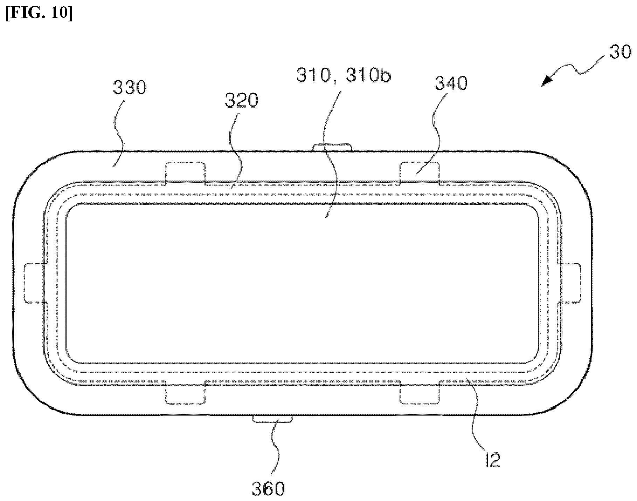

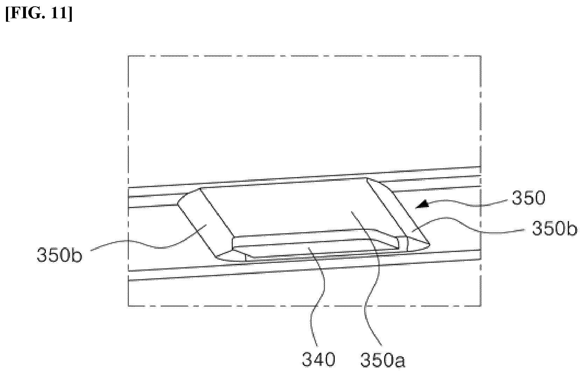

FIG. 9 is a bottom view showing a second cover according to FIG. 3. FIG. 10 is a plan view showing the second cover according to FIG. 3. FIG. 11 is an enlarged view showing a second wing part according to FIG. 3.

Referring to FIGS. 3 to 5 and 9 to 11, the second cover 30 is configured to be mutually suctioned with or vacuum-sealed to the first cover 10 to create the internal space IS in which the all-solid-state secondary battery S is placed. In addition, the second cover 30 may have a shape that is symmetrical with the first cover 10 along the horizontal axis, and may include a second pressing surface part 310, a second bending prevention part 320, a second suction surface part 330, a second protrusion part 340, a second wing part 350, and a second grip part 360. The second pressing surface part 310 corresponds to the first pressing surface part 110, the second bending prevention part 320 corresponds to the first bending prevention part 120, the second suction surface part 330 corresponds to the first suction surface part 130, the second protrusion part 340 corresponds to the first protrusion part 140, the second wing part 350 corresponds to the first wing part 150, and the second grip part 360 corresponds to the first grip part 160, and a detailed description thereof will be omitted. In addition, in some cases, the first wing part 150 and/or the second wing part 350 may not be formed, and the formation positions of the first protrusion part 140 and the second protrusion part 340 may be different from or not matched with each other. A second insert I2 corresponding to the first insert I1 may be inserted into the inner side of the second bending prevention part 320. Alternatively, similar to the first reinforcement member I3, a second reinforcement member I4 may be attached to one side of the second cover 30. As an example, the second reinforcement member I4 may be attached to the bottom surface of the second cover 30. At this time, the second reinforcement member 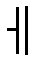 I4 may be attached at a position surrounding the second pressing surface part 310. In this way, when the second reinforcement member I4 is attached to the bottom surface of the second cover 30, the second bending prevention part 320 may or may not be formed on the second cover 30, and there is no particular limitation thereon.

The above detailed description is illustrative of the present disclosure. In addition, the above description shows and describes preferred embodiments of the present disclosure, and the present disclosure can be used in various other combinations, modifications, and environments. That is, changes or modifications are possible within the scope of the concept of the present disclosure disclosed herein, the scope equivalent to the written disclosure, and/or within the scope of skill or knowledge in the art. The above-described embodiment describes the best state for implementing the technical idea of the present disclosure, and various changes required in the specific application field and use of the present disclosure are possible. Accordingly, the detailed description of the present disclosure is not intended to limit the present disclosure to the disclosed embodiments.

## Claims

1. A device for pressing and sealing an all-solid-state secondary battery, the device comprising:
a first cover; and
a second cover, the first cover and the second cover being configured to be mutually vacuum-sealed to each other to define an internal space therebetween to place at least one all-solid-state secondary battery therein,
wherein the first cover comprises a first pressing surface part configured to press at least a first surface of the at least one all-solid-state secondary battery placed in the internal space by pressure transmitted by a heat-transfer fluid, and
wherein the second cover comprises a second pressing surface part configured to press at least a second surface of the at least one all-solid-state secondary battery placed in the internal space by the pressure transmitted by the heat-transfer fluid.

2. The device of claim 1, wherein the first pressing surface part comprises a top surface that is recessed downward from a top surface of the first cover to form a groove.

3. The device of claim 1, wherein the first pressing surface part includes a silicone or rubber material.

4. The device of claim 1, wherein at least one side of a first surface of the first pressing surface part that is configured to come into contact with the at least one all-solid-state secondary battery when pressed by the heat-transfer fluid has a greater surface roughness than a surface roughness of a second surface of the first pressing surface part that does not come into contact with the all-solid-state secondary battery when pressed, the first surface of the first pressing surface part and the second surface of the first pressing surface part being positioned opposite to each other.

5. The device of claim 1, further comprising:
a release film configured to be disposed between the first pressing surface part and the at least one all-solid-state secondary battery when the first cover and the second cover are vacuum-sealed to each other.

6. The device of claim 1,
wherein the first cover further comprises a first suction surface part positioned on an end or edge side of the first cover, and the second cover further comprises a second suction surface part positioned on an end or edge side of the second cover, and
wherein the first suction surface part and the second suction surface part are configured to be vacuum-sealed to each other.

7. The device of claim 6, wherein the first suction surface part has a rounded edge shape.

8. The device of claim 1, wherein the first cover further comprises a first bending prevention frame positioned on an outside of the first pressing surface part and having a first insert inserted into an inner side of the first bending prevention frame.

9. The device of claim 8, wherein the first bending prevention frame has a greater top-bottom thickness than a top-bottom thickness of the first pressing surface part.

10. The device of claim 1, wherein the first cover further comprises at least one first protrusion part protruding outward from a side of the first cover.

11. The device of claim 8, wherein the first cover further comprises at least one first protrusion part protruding outward from a side of the first cover, and the first insert is integral with the at least one first protrusion part.

12. The device of claim 1, wherein the first cover further comprises a first reinforcement member attached to a surface of the first cover on an outside of the first pressing surface part.

13. The device of claim 12, wherein the first reinforcement member is attached to a top surface of the first cover and has a shape surrounding the first pressing surface part.

14. The device of claim 10, wherein the first cover further comprises at least one first wing part, each being recessed downward from a top surface of the first cover underneath each of the at least one first protrusion part.

15. The device of claim 14, wherein a bottom surface of each of the at least one first wing part is spaced apart from each of the at least one first protrusion part.

16. The device of claim 14, wherein each of the at least one first wing part comprises:
a bottom surface; and
a side surface extending upward from the bottom surface,
wherein the side surface extends upward at an angle from the bottom surface of each of the at least one first wing part.

17. The device of claim 16, wherein the side surface of each of the at least one first wing part extends at an obtuse angle with respect to the bottom surface of each of the at least one first wing part.

18. The device of claim 1, wherein the first cover further comprises at least one first grip part protruding outward from a side of the first cover.

19. The device of claim 18, wherein each of the at least one first grip part has a tapered shape.

20. The device of claim 18,
wherein the second cover further comprises at least one second grip part protruding outward from a side of the second cover,
wherein when viewed from a top of the device, each of the at least one first grip part has at least one portion that is configured to not overlap with corresponding each of the at least one second grip part when the first cover and the second cover are vacuum-sealed to each other.
